# EUROPEAN PATENT APPLICATION

(11) **EP 2 119 687 A1**
(43) Date of publication of application: **18.11.2009**
(21) Application number: 08703112.6
(22) Date of filing: 11.01.2008
(51) Int. Cl.: C04B 35/622, B01D 39/00, B01D 39/20, B01D 46/00, B01D 53/86, B01J 32/00, B01J 35/04, C04B 38/06, F01N 3/02

(54) **PROCESS FOR PRODUCING HONEYCOMB STRUCTURE**

(30) Priority: 12.01.2007 JP 2007004864
(71) Applicant: NGK Insulators, Ltd., Nagoya-shi, Aichi 467-8530 (JP)
(72) Inventor: KANEDA, Atsushi, Nagoya-shi Aichi 467-8530 (JP); ICHIKAWA, Shuichi, Nagoya-shi Aichi 467-8530 (JP)
(74) Representative: Paget, Hugh Charles Edward
(86) International application number: PCT/JP2008/050248
(87) International publication number: WO 2008/084844

(57) **Abstract**

A process for producing a honeycomb structure includes: manufacturing a honeycomb-shaped formed article (honeycomb formed article) by kneading a forming raw material containing ceramic as a main component and a forming auxiliary, an additive, and a pore former to prepare kneaded clay and forming and drying the kneaded clay, calcining the honeycomb formed article to obtain a calcined article, and firing the calcined article. Upon performing a tensile load measurement of the kneaded clay or the formed article, a slope θ of the straight line through an inflection point b and an yielding point c of a graph showing a relation between the tensile load and a displacement amount is below 100% of a slope δ of the straight line through a starting point a where an elastic deformation is shown and the inflection point b. According to the present invention, there can be produced a honeycomb structure capable of suppressing defect generation upon forming a honeycomb to improve yield, hardly generating a new defect upon actual use of the honeycomb structure, and having excellent durability.

## Description

### Technical Field

The present invention relates to a process for producing a honeycomb structure useful as a trapping filter for exhaust gas, in particular, a diesel particulate filter (DPF) for trapping particulate matter in diesel engine exhaust gas, capable of effectively inhibiting a defect such as a crack from being generated due to thermal stress upon use or upon regeneration, and having excellent durability.

### Background Art

In various fields such as chemistry, electric power, iron and steel, and an industrial waste treatment, there has recently been used a ceramic honeycomb structure excellent in thermal resistance and corrosion resistance as a trapping filter used for an environmental measure such as pollution prevention, product recovery from high-temperature gas, and the like. For example, a ceramic honeycomb structure (hereinbelow sometimes referred to simply as a "honeycomb structure") has suitably been used as a dust-collecting filter used at high temperature in a corrosive gas atmosphere such as a diesel particulate filter (DPF), which traps particulate matter discharged from a diesel engine.

A honeycomb structure used for such a purpose has a function or the like of trapping and removing unnecessary particulate matter when a fluid to be treated passes through pores of the honeycomb structure or a function of bringing the fluid to be treated into contact with a catalyst which is loaded on the surface and inside the pores of the honeycomb structure. In order to efficiently bring such functions into practice, the contact area with the fluid to be treated is generally increased by imparting a shape of a tube, a monolith, or a honeycomb to a honeycomb structure having a thin film shape or a wall shape. Therefore, when there is a hole passing through a film or a wall of the honeycomb structure, i.e., a defect, the honeycomb structure cannot exhibit filterability or performance as a catalyst carrier.

Upon forming such as extrusion forming of a honeycomb formed article, there is used kneaded clay containing a ceramic raw material constituted of particles having low plasticity as the main component. However, pressure bonding has been insufficient in the intersections of the partition walls forming each cell of the honeycomb formed article. Therefore, when a DPF was produced from a honeycomb fired article (honeycomb structure) obtained by firing the honeycomb formed article, a defect was detected by an inspection method for detecting a defect such as laser smoke (a method of introducing fine particles into a DPF and irradiating a light having strong directivity to the fine particles discharged from the DPF in such a manner that the light passes in the vicinity of the DPF to make fine particles visible), and a cell crack was actually confirmed, which led to decrease in yield of DPFs.

In addition, even in the case that a defect was not found upon producing a honeycomb structure, when the DPF was exposed to an atmosphere where temperature drastically changes upon practical use, a cell crack was generated from a potentially defective portion, and soot leakage might be caused.

### Disclosure of the Invention

The present invention has been made in view of the aforementioned problem and aims to provide a process for producing a honeycomb structure capable of suppressing defect generation upon forming a honeycomb to improve the yield, hardly generating a new defect upon actual use of the honeycomb structure, and having excellent durability.

In order to achieve the above object, the present invention provides the following process for producing a honeycomb structure.

[1] A process for producing a honeycomb structure comprising: manufacturing a honeycomb-shaped formed article (honeycomb formed article) by kneading a forming raw material containing ceramic as a main component and a forming auxiliary, an additive, and a pore former to prepare kneaded clay and forming and drying the kneaded clay, calcining the honeycomb formed article to obtain a calcined article, and firing the calcined article; wherein, upon performing a tensile load measurement of the kneaded clay or the formed article, a slope θ of the straight line through an inflection point b and an yielding point c of a graph showing a relation between the tensile load and a displacement amount is below 100% of a slope δ of the straight line through a starting point a where an elastic deformation is shown and the inflection point b.

[2] The process for producing a honeycomb structure according to [1], wherein the ceramic contain as a main component at least one kind selected from the group consisting of cordierite forming material, mullite, alumina, aluminum titanate, lithium aluminum silicate, silicon carbide, silicon nitride, metal silicon, aluminum nitride, and Al₄SiC₄.

[3] The process for producing a honeycomb structure according to [1] or [2], wherein an organic binder or an inorganic binder is added to the forming auxiliary.

[4] The process for producing a honeycomb structure according to any one of [1] to [3], wherein the additive is a plasticizer.

[5] The process for producing a honeycomb structure according to [4], wherein the plasticizer is a water-absorbing resin.

[6] The process for producing a honeycomb structure according to any one of [1] to [5], wherein the pore former is an organic pore former.

[7] The process for producing a honeycomb structure according to any one of [1] to [6], wherein the honeycomb fired article has a porosity of 40% or more.

As described above, a process for producing a ceramic structure of the present invention can inhibit a defect from generating upon forming a honeycomb to improve the yield and a new defect from generating upon practical use of the honeycomb structure and has excellent durability.

### Brief Description of the Drawings

[Fig. 1] Fig. 1 is a graph showing a relation between the tensile load and the displacement amount obtained by a tensile load measurement of a formed article (sample).
[Fig. 2] Fig. 2 is a schematic view showing an example of a tensile load measurement apparatus for a formed article (sample).
[Fig. 3(a)] Fig. 3 (a) is a side view showing an example of a formed article shown in Fig. 2.
[Fig. 3(b)] Fig. 3(b) is a front view of Fig. 3(a).

### Description of Reference Numerals

20: formed article (sample)

### Best Mode for Carrying out the Invention

Hereinbelow, a process for producing a ceramic structure of the present invention will be described in detail on the basis of a specific embodiment. However, the present invention should not be construed with being limited to the embodiment, and various changes, modifications, and improvements may be made on the basis of knowledge of a person of ordinary skill as long as they do not deviate from the scope of the present invention.

In a process for producing a honeycomb structure of the present invention, a honeycomb-shaped formed article (honeycomb formed article) is manufactured by kneading a forming raw material containing ceramic as a main component and a forming auxiliary, an additive, and a pore former to prepare kneaded clay and forming and drying the kneaded clay, the honeycomb formed article is calcined to obtain a calcined article, and the calcined article is fired to obtain a honeycomb fired article. Upon performing a tensile load measurement of the formed article, a slope θ of the straight line through the inflection point b and the yielding point c of the graph showing a relation between the tensile load and a displacement amount is below 100% of a slope δ of the straight line through the starting point a where an elastic deformation is shown and the inflection point b.

By this constitution, a process for producing a ceramic structure of the present invention can produce a honeycomb structure capable of suppressing defect generation upon forming a honeycomb to improve the yield, hardly generating a new defect upon practical use of the honeycomb structure, and having excellent durability.

Next, a process for producing a honeycomb structure of the present invention will be described in more detail on the basis of drawings.

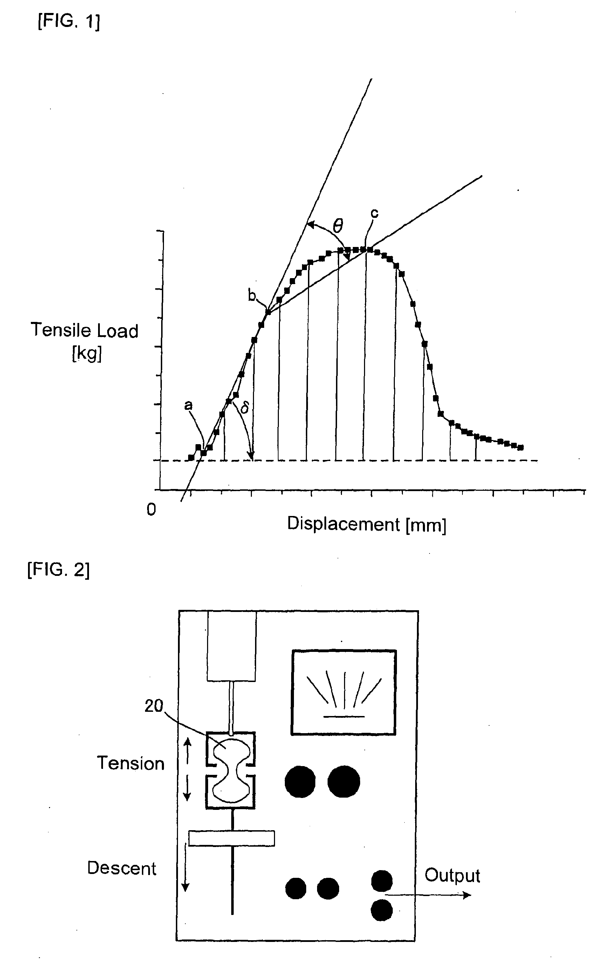

Fig. 1 is a graph showing a relation between the tensile load and the displacement amount obtained by a tensile load measurement of a formed article, and Fig. 2 is a schematic view showing an example of a tensile load measurement apparatus for a formed article.

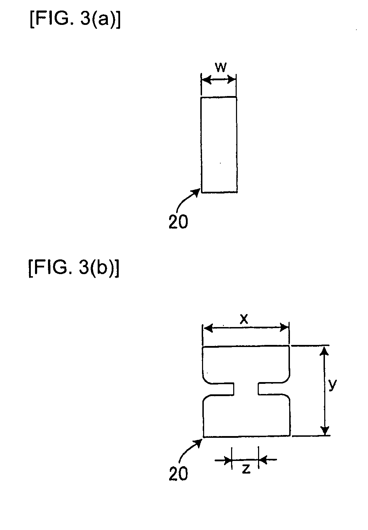

A main characteristic of a process for producing a ceramic structure of the present invention lies in suitably adjusting tensile load strength of a ceramic structure from a graph showing a relation between the tensile load and the displacement shown in Fig. 1 when a tensile load measurement of a formed article (see Figs. 3(a) and 3(b)) is performed using a rheometer shown in Fig. 2.

Here, in the graph shown in Fig. 1, a deformation of a sample (an index of tensile load strength of a ceramic structure) from the starting point a where an elastic deformation is shown to the inflection point b is due to an elastic deformation. Next, a deformation from the inflection point b to the yielding point c is due to a plastic deformation. Incidentally, the yielding point c is the point where the sample is deformed and fractured.

In a process for producing a ceramic structure of the present invention, the slope θ of the straight line through the inflection point b and the yielding point c of a graph showing a relation between the tensile load and the displacement amount is preferably below 100% (more preferably 90% or less, furthermore preferably 85% or less) of a slope δ of the straight line through the starting point a where an elastic deformation is shown and the inflection point b.

This is because, in the case that the slope θ of the straight line through the inflection point b and the yielding point c of a graph is above 90% of a slope δ of the straight line through the starting point a where an elastic deformation is shown and the inflection point b, the kneaded clay as the forming raw material has a low plastic deformation, and, when a honeycomb structure is formed, various defects remarkably generate to decrease the production yield, and, even in a case that no defect is found in the honeycomb structure, soot leakage may be caused since a cell crack is generated from a potentially defective portion when the honeycomb structure is exposed to an atmosphere where temperature drastically changes upon practical use in the case that the honeycomb structure is used as a DPF.

Next, in the present invention, as a forming raw material used for producing the aforementioned honeycomb formed article, a material obtained by adding a forming auxiliary to the main component material of ceramic and/or metal. Examples of the other components contained in the forming raw material include water as a dispersion medium, a forming auxiliary, an additive, and a pore former. Hereinbelow, the forming raw material will specifically be described by each constituent.

The main component material contained in the forming raw material is of ceramic and/or metal and kneaded as the main component of the forming raw material to prepare kneaded clay, followed by formation into a honeycomb formed article, and drying. After firing the honeycomb formed article, the main component material constitutes the main component of the porous honeycomb structure. An example of the ceramic and/or metal constituting the main component material is at least one selected from the group consisting of cordierite forming materials, mullite, alumina, aluminum titanate, lithium aluminum silicate, silicon carbide, silicon nitride, metal silicon, aluminum nitride, and Al₄SiC₄. As specific examples, silicon carbide and silicon nitride are independently used as the main component material to obtain a porous honeycomb structure containing silicon carbide or silicon nitride as the main component, or silicon carbide and metal silicon are used as the main component material to obtain a porous honeycomb structure of a Si-SiC sintered article.

In addition, in the present invention, it is preferable that an organic binder is added as a forming auxiliary. This is because the organic binder improves plasticity and formability of kneaded clay prepared by kneading the forming raw material and functions as a shape retainer for retaining the shape of the honeycomb formed article. On the other hand, the content of the organic binder in the forming raw material is preferably minimal because the organic binder has problems of generating a defect such as a crack in a calcined article to deteriorate strength of the calcined article. Therefore, the content rate of the organic binder is preferably 20 parts by mass or less, more preferably 10 parts by mass or less with respect to 100 parts by mass of total main component material. Depending on the intended use, the rate may be 0 part by mass (no organic binder may be contained).

Incidentally, there is no particular limitation on the aforementioned organic binder, and an example of the organic binder is an organic polymer. Specific examples include hydroxypropoxylmethyl cellulose, hydroxypropylmethyl cellulose, methyl cellulose, hydroxyethyl cellulose, carboxymethyl cellulose, and polyvinyl alchohol. The organic binder may be employed alone or as a combination of two or more.

Further, in the present invention, an inorganic binder is preferably added as a forming auxiliary. This is because, the inorganic binder improves plasticity and formability of kneaded clay prepared by kneading the forming raw material and functions as a shape retainer for retaining the shape of the honeycomb formed article.

The content rate of the organic binder used in the present invention is preferably 0.01 to 10 parts by mass, more preferably 0.1 to 5 parts by mass with respect to 100 parts by mass of the main component material. Thus, the content rate of the inorganic binder in the kneaded clay is preferably determined from the correlation with the main component material (ceramic). When the content rate of the inorganic binder is below 0.01 part by mass with respect to 100 parts by mass of the main component material, plasticity of the kneaded clay is decreased, which may cause a cell crack due to insufficient pressure bonding or a cell crack in the honeycomb formed article upon degreasing. When the content rate is above 10 parts by mass, porosity may be decreased due to firing shrinkage of the inorganic binder upon firing. By thus controlling the content rate of the inorganic binder, heat generation upon firing can be controlled at a state of improving plasticity of the kneaded clay. This can inhibit a cell crack from generating and improve the yield.

Incidentally, there is no particular limitation on the inorganic binder, and, for example, there may suitably be employed at least one kind selected from the group consisting of pyrophyllite-talc, smectite, vermiculite, mica, brittle mica, and hydrotalcite. Of these, particularly preferable are smectite from the view point of the price and composition and hydrotalcite and talc from the viewpoint of inhibiting alkali metal from scattering.

The plasticizer used in the present invention is preferably a water-absorbing resin. Here, the "water-absorbing resin" means a resin which absorbs water when it is mixed with water and kneaded together with the main component material and the forming auxiliary to have a structure of retaining water in the resin and which has high mechanical strength and is hardly collapsed. Since the water-absorbing resin and ceramic raw material are granulated when they are mixed and kneaded, plasticity of the kneaded clay can be improved. In the case of performing extrusion forming using an extrusion die in such a state into a honeycomb shape to obtain a honeycomb formed article, pressure bonding in the intersections are sufficiently performed to inhibit defect generation.

The water-absorbing resin is in a particle shape and has an average particle diameter of preferably 2 to 200 µm, more preferably 2 to 100 µm, after absorbing water. This is because, when the average particle diameter is below 2 µm, an effect as the plasticizer cannot sufficiently be exhibited. When the average particle diameter is above 200 µm, the particle diameter is large in comparison with that of the other powder raw material used in the kneaded clay, dispersibility may be decreased, and the pores after firing becomes large, which may cause a defect in the honeycomb structure. When the average particle diameter of the water-absorbing resin after absorbing water is 2 to 200 µm, the resin has sufficient plasticity and dispersibility, and pores after firing are not large beyond necessity. Therefore, crack generation can be inhibited.

In addition, the aforementioned water-absorbing resin has a water-absorption ratio of preferably 2 to 100 times, more preferably 2 to 50 times. When the water-absorbing ratio is below 2 times, water absorption is low, and improved plasticity may not be obtained. When the water-absorption ratio is above 100 times, since a honeycomb-shaped honeycomb formed article contains much water, drying time becomes long, and the drying requires much electric power to increase drying costs. Further, since hardness of the honeycomb-shaped honeycomb formed article is decreased, and dimension changing rate by drying is increased, deformation may easily be caused to decrease the yield. Here, "the dimension changing rate by drying" means an index showing a degree of expansion and shrinkage before and after drying and can be obtained from (length before drying)/(length after drying). Thus, when the water-absorption ratio is 2 to 100 times, plasticity of the kneaded clay improves, and a certain hardness is maintained to show good formability, and a honeycomb structure having excellent size accuracy can be obtained.

Further, the water-absorbing resin is contained at a rate of 0.1 to 20 parts by mass, more preferably 1 to 20 parts by mass with respect to 100 parts by mass of the main component material. Thus, the content rate of the water-absorbing resin in the kneaded clay is preferably determined depending on the correlation with the main component material. When the content rate of the water-absorbing resin is below 0.1 part by mass with respect to 100 parts by mass of the main component material, plasticity of the kneaded clay is not improved because of the low rate, and the yield may be decreased. When the rate is above 20 parts by mass, heat generation upon firing is increased, and a crack may be generated in the honeycomb structure. By thus controlling the content rate of the water-absorbing resin, heat generation upon firing can be inhibited at the state that plasticity of the kneaded clay is improved. This enables to inhibit a cell crack from generating and to improve the yield.

Incidentally, there is no particular limitation on the aforementioned water-absorbing resin, and, for example a spherical shape water-absorbing resin obtained by subjecting a vinyl monomer to reversed phase suspension polymerization can suitably be used.

In the present invention, an organic pore former is preferably contained as a pore former. Though the water-absorbing resin itself also functions as a pore former, the porosity of the honeycomb structure can be increased by further adding an organic pore former in addition to the water-absorbing resin. Though there is no particular limitation on the organic pore former, examples of the pore former include graphite, flour, starch, phenol resin, methyl polymethacrylate, polyethylene, polyethylene telephthalate, unfoamed resin, and foamed resin. Since the content rate of the water-absorbing resin can be suppressed by using the organic pore former together, hardness of the kneaded clay is increased, and size accuracy can be improved.

In the present invention, the kneaded clay is prepared by kneading the aforementioned forming raw material, the kneaded clay is formed and dried to produce a honeycomb-shaped formed article (honeycomb formed article), the honeycomb formed article is calcined to obtain a calcined article, and the calcined article is fired to obtain a porous honeycomb structure. Hereinbelow, description will specifically be made by each step.

There is no particular limitation on the method for preparing the kneaded clay by kneading the forming raw material, and, for example, a method using a kneader or a vacuum kneader may be employed.

There is no particular limitation on the shape of the honeycomb formed article to be produced, and, for example, a shape where a plurality of cells are formed by the partition walls with the cells passing through between two end faces may be employed. When the honeycomb formed article is used for a filter such as a DPF, it is preferable that end portions of the cells are alternately plugged in two end faces. There is no particular limitation on the whole shape of the honeycomb formed article, and, for example, a cylindrical shape, a quadrangular prism shape, or a triangular prism shape may be employed. There is no particular limitation on the cell shape of the honeycomb formed article, and, for example, a quadrangle, a hexagon, or a triangle may be employed.

There is no particular limitation on the method for producing a honeycomb formed article, and a conventionally known forming method such as extrusion forming, injection forming, and press forming may be employed. Of these, a method where the kneaded clay prepared as described above is subjected to extrusion forming using a die having desired cell shape, partition wall thickness, and cell density can suitably be employed. There is no particular limitation on the drying method, and a conventionally known drying method such as hot air drying, microwave drying, dielectric drying, reduced pressure drying, vacuum drying, and freeze drying can be employed. Of these, from the view point that the whole formed article can be dried quickly and uniformly, a drying method where hot air drying is combined with microwave drying or dielectric drying is preferable.

In the present invention, the honeycomb formed article is calcined before the main firing. The "calcination" in the present invention means an operation to combust and remove organic matter (organic binder, pore former, and the like) in the honeycomb formed article and is also referred to as degreasing, binder removal, or the like. The calcination can be performed, for example, by heating the honeycomb formed article at about 400°C in an ambient atmosphere.

Finally, the calcined article obtained above is fired (subjected to main firing) to obtain a honeycomb fired article (honeycomb structure). The "main firing" in the present invention means an operation where the forming raw material in the calcined article is sintered for densification in order to secure predetermined strength. Since the firing conditions (temperature and time) are different depending on the kind of the forming raw material, suitable conditions may be selected according to the kind. For example, when a structure of silicon carbide and metal silicon is obtained, firing is preferably performed at 1400 to 1800°C.

Incidentally, though the yield can be improved by adjusting the kneaded clay even in the case that the resultant honeycomb fired article has a porosity of below 40% in the present invention, it has newly been found out that, particularly, in the case that the resultant honeycomb fired article has a porosity of 40% or more, effect in inhibiting defect generation upon forming a honeycomb can remarkably be improved by adjusting the kneaded clay.

### Example

Hereinbelow, the present invention will specifically be described by Examples. However, the present invention is by no means limited to these Examples.

A SiC powder as the ceramic raw material, a metal Si powder, and methyl cellulose and hydroxypropoxylmethyl cellulose as the forming auxiliaries, a water-absorbing resin as the additive, and starch as the organic pore former were mixed together; a surfactant and water were added to the mixture; and the mixture was kneaded by a vacuum kneader to prepare kneaded clay. Table 1 shows compounding ratios of these components in Examples 1 and 2 and Comparative Examples 1 and 2. After a honeycomb structure was obtained by extrusion-forming the kneaded clay, the formed article was dried with microwaves and hot air to obtain a honeycomb formed article. The kneaded clay obtained was evaluated for tensile load measurement. The results were shown in Table 2.

**Table 1**

| | Kneaded clay No. | Honeycomb structure No. | SiC powder ratio (parts by mass) | Metal Si powder ratio (parts by mass) | Forming auxiliary ratio (parts by mass) | Additive ratio (parts by mass) | Organic pore former ratio (parts by mass) | Water ratio (parts by mass) |
|---|---|---|---|---|---|---|---|---|
| Example 1 | 1 | 1 | 80 | 20 | 10 | 1 | 5 | 38 |
| Example 2 | 2 | 2 | 80 | 20 | 5 | 3 | 10 | 41 |
| Comp. Ex. 1 | 3 | 3 | 80 | 20 | 10 | 1 | 5 | 26 |
| Comp. Ex. 2 | 4 | 4 | 80 | 20 | 10 | 2 | 5 | 32 |

**Table 2**

| | Kneaded clay No. | slope θ / slope δ (%) |
|---|---|---|
| Example 1 | 1 | 80 |
| Example 2 | 2 | 50 |
| Comp. Ex. 1 | 3 | 100 |
| Comp. Ex. 2 | 4 | 100 |

As shown in Table 2, while the ratio of slope θ / slope δ was 90% or less in Examples 1 and 2, the ratio of slope θ / slope δ was 100% in Comparative Examples 1 and 2, and it was found out that the kneaded clay was led to fracture with no plastic deformation.

After that, the ceramic formed article was subjected to plugging in such a manner that adjacent circulation holes are plugged in mutually opposite end portions, drying, degreasing at about 400°C in an ambient atmosphere, and then firing at about 1450°C in an Ar inert atmosphere to obtain a segment (honeycomb structure) for a Si-bonded SiC honeycomb filter. The presence of a defect in the segment was inspected by the use of laser smoke, and the kind of the defect was identified by eye observation. In addition, the porosity was measured by mercury porosimetry. The results are shown in Table 3.

**Table 3**

| | Honeycomb structure No. | Porosity (%) | Frequency of defect generation in segment (n=100) | Number of cell crack / number of defect | Yield by cell crack (%) | Yield by kneaded clay adjustment (%) |
|---|---|---|---|---|---|---|
| Example 1 | 1 | 33 | 2 | 2/2 | 98 | 54 |
| Example 2 | 2 | 52 | 5 | 4/5 | 96 | 86 |
| Comp. Ex. 1 | 3 | 35 | 61 | 56/61 | 44 | - |
| Comp. Ex. 2 | 4 | 50 | 94 | 90/94 | 10 | - |

In the case that a defect was caused in the segment after firing in the DPF production process, the segment was faulty and caused decrease in yield. In Comparative Example 1, since slope θ / slope δ was 100%, the yield was low, and most of the defects were cell cracks due to insufficient pressure bonding derived from its low plasticity. Likewise, in Comparative Example 2, in addition to 100% of slope θ / slope δ, the porosity was 40% or more, the yield was very low, and most of the defects were cell cracks due to insufficient pressure bonding derived from its low plasticity.

On the other hand, in Example 1, since slope θ / slope δ was below 100%, the yield improved. In addition, in Example 2, where the porosity was 40% or more, the yield improved dramatically in comparison with Comparative Example 2, and the improvement effect was 80% or more.

### Industrial Applicability

A process for producing a honeycomb structure of the present invention can suppress defect generation upon forming a honeycomb to improve the yield, hardly generates a new defect upon practical use of the honeycomb structure, and has excellent durability. Therefore, the honeycomb structure obtained can suitably be used as a head port liner for an automobile engine, an exhaust manifold liner, a catalyst converter, or a filter for exhaust gas.

## Claims

1. A process for producing a honeycomb structure comprising:
manufacturing a honeycomb-shaped formed article (honeycomb formed article) by kneading a forming raw material containing ceramic as a main component and a forming auxiliary, an additive, and a pore former to prepare kneaded clay and forming and drying the kneaded clay,
calcining the honeycomb formed article to obtain a calcined article, and
firing the calcined article;
wherein, upon performing a tensile load measurement of the kneaded clay or the formed article, a slope θ of the straight line through an inflection point b and an yielding point c of a graph showing a relation between the tensile load and a displacement amount is below 100% of a slope δ of the straight line through a starting point a where an elastic deformation is shown and the inflection point b.

2. The process for producing a honeycomb structure according to Claim 1, wherein the ceramic contains as a main component at least one kind selected from the group consisting of cordierite forming material, mullite, alumina, aluminum titanate, lithium aluminum silicate, silicon carbide, silicon nitride, metal silicon, aluminum nitride, and Al₄SiC₄.

3. The process for producing a honeycomb structure according to Claim 1 or 2, wherein an organic binder or an inorganic binder is added to the forming auxiliary.

4. The process for producing a honeycomb structure according to any one of Claims 1 to 3, wherein the additive is a plasticizer.

5. The process for producing a honeycomb structure according to Claim 4, wherein the plasticizer is a water-absorbing resin.

6. The process for producing a honeycomb structure according to any one of Claims 1 to 5, wherein the pore former is an organic pore former.

7. The process for producing a honeycomb structure according to any one of Claims 1 to 6, wherein the honeycomb fired article has a porosity of 40% or more.
